# EUROPÄISCHE PATENTSCHRIFT

(11) **EP 0 783 070 B1**
(45) Veröffentlichungstag und Bekanntmachung des Hinweises auf die Patenterteilung: **30.05.2001**
(21) Anmeldenummer: 96117862.1
(22) Anmeldetag: 07.11.1996
(51) Int. Cl.: E06B 3/00, E04F 11/18

(54) **Klemvorrichtungen zum Befestigen von Glasplatten, insbesondere von Glasplatten aus Verbundsicherheitsglas**
Clamping device for mounting glass plates, especially glass plates made of safety glass
Dispositif de fixation par serrage pour la fixation de plaques de verre, surtout les plaques de verre fabriquées de verre de sécurité

(30) Priorität: 09.11.1995 DE 19541810; 17.01.1996 DE 29600746 U
(43) Veröffentlichungstag der Anmeldung: 09.07.1997
(73) Patentinhaber: SWS Gesellschaft für Glasbaubeschläge mbH, 51545 Waldbröl (DE)
(72) Erfinder: Wagner, Jürgen, Dipl.-Kfm., 51580 Reichshof (DE); Schmitz, Hans Dieter, 53809 Ruppichteroth (DE)
(74) Vertreter: Schwarz, Klaus-Jürgen, Dipl.-Ing.

(56) Entgegenhaltungen:
- DE-A- 3 337 759
- DE-U- 9 318 761

## Beschreibung

Die Erfindung betrifft Klemmvorrichtungen zum Befestigen von Glasplatten, insbesondere Glasplatten aus Verbundsicherheitsglas nach dem Oberbegriff des Anspruches 1, des Anspruches 13 oder des Anspruches 18.

Im Fassadenbereich von Gebäuden, für Balkonbrüstungen und Trennwände an Treppen wird üblicherweise Einscheibensicherheitsglas (ESG) mit einem hohen Härtegrad verwendet. Für die Halterung der Glasplatten werden Klemmvorrichtungen nach dem Oberbegriff des Anspruches 1, des Anspruches 13 oder des Anspruches 18 eingesetzt.

Nachteilig beim Einsatz von Einscheibensicherheitsglas (ESG) ist jedoch, daß dieses wegen seines hohen Härtegrades - gerade in Personenschutzzonen - keine hinreichende, den Sicherheitsbestimmungen entsprechende Verformungsenergie aufnimmt. Dies hat zur Folge, daß beispielsweise eine Person, die auf eine mit Einscheibensicherheitsglas bespannte Fläche aufprallt, das Glas zerstören kann und dadurch in hohem Maße gefährdet wird, beispielsweise bei einem Absturz aus größerer Höhe.

In sogenannten Verkehrsbereichen ist der Einsatz von Einscheibensicherheitsglas (ESG) umstritten und bei Überkopfverglasungen mit freihängender Schürze sogar verboten. Hier dürfen lediglich Glasscheiben mit einer splitterbindenden Eigenschaft, wie z.B. Verbundsicherheitsglas (VSG), eingesetzt werden.

Aufgrund der Scherbenbildung bei Glasbruch von Einscheibensicherheitsglas geht der Trend daher zum Verbundsicherheitsglas (VSG), einem laminierten Zwei- oder Mehrschichtenglas mit Zwischenfolie oder transparentem Harz oder dergleichen, ähnlich wie beim Sicherheitsglas für Kraftfahrzeuge, jedoch mit einer wesentlich größeren Dicke.

Die Verwendung von teilvorgespanntem, vollvorgespanntem, gehärtetem oder sogar ungehärtetem Verbundsicherheitsglas (VSG) bietet daher in Form von Umwehrungen oder Überkopfverglasungen die geforderten Sicherheitseigenschaften zum Personenschutz.

Bei Verbundsicherheitsglas muß die Technik der Halterung aber besonders auf "spannungsfreies Lagern" - insbesondere an den Eckbereichen und vor allem bei gebogenen Glasscheiben entsprechend den einschlägigen Vorschriften - ausgerichtet sein. Die jetzige Technik, Verbundsicherheitsglas einzusetzen, besteht in der Anwendung von aufwendigen und kostenintensiven Rahmenkonstruktionen für die Halterung der Scheiben.

Aus DE 93 18 761 U1 ist bereits eine Klemmvorrichtung zum Befestigen von Platten, insbesondere Glasscheiben bekannt, bei der jedes Polster an seiner Rückseite zur Klemmbacke gerichtete Noppen- oder stegförmige Haltevorsprünge aufweist, mit denen das Polster in entsprechenden Aussparungen an der Innenseite der Klemmbacke festgelegt ist. Solche Polster können an der der Platte oder Glasscheibe zugewandten Seite mehrere Saugnäpfe aufweisen, um auf diese Weise die Haltewirkung der Klemmvorrichtung gegenüber völlig glatten Polstern noch zu verbessern. Hierbei ist jedoch an der der Platte oder Glasscheibe zugewandten Seite der Polster eine größere Anzahl von Saugnäpfen vorhanden, so daß derartige Klemmvorrichtungen nur für die randseitige Halterung von ebenen Platten oder Glasscheiben, nicht jedoch zur spannungsfreien Halterung von gebogenen Scheiben, insbesondere aus Verbundsicherheitsglas geeignet sind.

Der Erfindung liegt die Aufgabe zugrunde, Klemmvorrichtungen der eingangs erwähnten Art so auszubilden, daß diese für eine möglichst spannungsfreie Aufnahme von Glasplatten jeglicher Art, insbesondere jedoch von Glasplatten aus gebogenem und planem Verbundsicherheitsglas, ohne besondere zusätzliche Maßnahmen an den Glasplatten selbst - auch bei fertigungstechnisch bedingten Maßabweichungen - besonders gut geeignet sind und eine sichere und dauerhafte Klemmhalterung der Glasplatten auch bei hoher mechanischer Beanspruchung gewährleisten.

Diese Aufgabe wird gemäß einer bevorzugten ersten Ausführungsform einer Klemmvorrichtung nach dem Oberbegriff des Anspruches 1 durch folgende Merkmale gelöst:
a) das Polster mindestens einer Klemmbacke weist mindestens ein Klemmelement in Form eines gegen die Glasplatte vorspringenden Noppens mit einer von dem Polster abgesetzten, an der Glasplatte punktförmig angreifenden stirnseitigen Anlage- oder Haltefläche auf,
b) an mindestens einer Klemmbacke ist mindestens ein Klemmelement kippbar gelagert, das aus elastomerem Material oder aus einem Metallteil besteht, das mit elastomerem Material beschichtet ist oder ein aufgeklebtes oder durch formschlüssigen Eingriff befestigtes Polster für die Anlage an der Glasplatte aufweist.

In einer weiteren Ausführungsform der Erfindung kann die Aufgabe bei einer Klemmvorrichtung nach dem Anspruch 13 auch dadurch gelöst werden, daß an mindestens einer Klemmbacke mindestens ein Saugnapf aus elastomerem Material angeordnet ist, der für die Befestigung der Glasplatte nach deren Montage in seinem Volumen veränderbar ist.

Besonders vorteilhafte Weiterbildungen dieser Ausführungsformen der Erfindung sind in den Ansprüchen 2 bis 12 und 14 bis 17 enthalten.

Ein besonderer Vorteil der ersten Ausführungsform der Erfindung besteht darin, daß die Glasplatten nicht von den Polstern an den Klemmbacken der Klemmvorrichtungen vollflächig, sondern vielmehr durch Klemmelemente nur punktförmig derart erfaßt werden, daß an den Einspannstellen der Glasplatten durch die Klemmvorrichtungen nicht zusätzliche Spannungen erzeugt werden, die einerseits zu einer Beschädigung der Glasplatten, andererseits aber auch zu einer Beeinträchtigung der Dauerhaftigkeit und Sicherheit der Klemmhalterungen führen würden.

Außerdem ist es aber auch besonders vorteilhaft, daß die Klemmvorrichtung an den Innenseiten einer oder beider Klemmbacken mit kippbaren Klemmelementen aus elastomerem Material oder aus mit elastomerem Material beschichteten Metallteilen ausgebildet ist. Diese Klemmelemente können herstellungsmäßig in besonders einfacher Form kugel-, halbkugel-, aber auch keil- oder kegelförmig ausgebildet sein oder eine sonstige geeignete Form haben und an den Innenseiten der beiden Klemmbacken jeder Klemmvorrichtung mit geringem Spiel derart gelagert sein, daß sie sich den Maßabweichungen der zu haltenden Glasscheiben ohne weiteres anpassen, um insbesondere auch gebogene Scheiben aus Verbundsicherheitsglas spannungsfrei zwischen sich festzuhalten.

Besonders vorteilhaft ist es weiterhin, wenn die Klemmvorrichtung mit Saugnäpfen an den Klemmbacken derart ausgebildet ist, daß sich die Klemmbacken mit den Saugnäpfen an der Glasscheibe festsaugen. Jeder Saugnapf kann dabei in einer Aussparung an jeder der beiden Klemmbacken so angeordnet sein, daß ein Element zum Erzeugen eines Unterdruckes, wie zum Beispiel ein Stellelement, eine Stellschraube oder dergleichen von außen her zugänglich ist. Die Stellelemente werden dann durch übergeschobene Abdeckungen aus Metall oder Kunststoff verschlossen, so daß sie an den Klemmbacken nach außen nicht in Erscheinung treten.

Besonders vorteilhaft ist es ferner, wenn das Basisteil der Klemmvorrichtung eine gewölbte Montagefläche und eine quer dazu ausgerichtete längliche Bohrung für die Befestigung aufweist. Die Klemmvorrichtung kann so an Rundrohrstützen in besonders einfacher Weise auf den Rand der zu haltenden gebogenen oder ebenen Glasscheibe ausgerichtet werden.

Zur Befestigung der Klemmvorrichtungen an einer ebenen Wand, wie zum Beispiel an einem Vierkant-Stützrohr, ist ein Zwischenstück als Scharnierfunktion vorgesehen, das eine ebene Befestigungsfläche für die Wandbefestigung und eine zylindrische Anlagefläche an der den Klemmbacken zugewandten Seite für die entsprechend gestaltete Montagefläche an der Klemmvorrichtung aufweist.

Alle Klemmvorrichtungen sind somit in der Lage, gebogene Glasscheiben mit allen vorkommenden Standard- und Spezialbiegungen in einem weiten Radienbereich sicher und verspannungsfrei festzuhalten.

Die der Erfindung zugrunde liegende Aufgabenstellung kann in einer dritten Ausführungsform der Erfindung gemäß Anspruch 18 weiterhin durch folgende Merkmale gelöst werden:
a) jedes Polster hat eine rechteckig längliche Form,
b) das Polster mindestens einer Klemmbacke liegt mit einer konvex gewölbten Anlage- oder Haltefläche an der Glasplatte parallel zu deren Rand beziehungsweise zu deren Wölbung linien- oder streifenförmig an.

Besonders vorteilhafte Weiterbildungen dieser dritten Ausführungsform sind in den Ansprüchen 19 bis 22 gekennzeichnet, während in den Ansprüchen 23 bis 25 eine Befestigungsanordnung für alle drei Ausführungsformen beansprucht wird, die gemäß Anspruch 23 dadurch gekennzeichnet ist, daß das Basisteil eine Rastverzahnung mit mehreren parallel zu der Längsachse der zylindrisch gewölbten Montagefläche nebeneinander ausgerichteten Rastrippen aufweist. Vorteilhafte Weiterbildungen dieser schwenkbaren Befestigung mit Rastverzahnung sind im Anspruch 24 gekennzeichnet.

Anspruch 25 ist auf eine weiter abgewandelte Ausführungsform der erfindungsgemäßen Klemmvorrichtungen gerichtet, wobei mindestens eine der beiden Klemmbacken einen die Glasplatte unter- oder übergreifenden Stützsteg mit einem Stützpolster aus einem elastomeren Material für die Verbundsicherheits-Glasplatte aufweist. Das Stützpolster besteht hierbei vorteilhafter Weise aus einem ETHYLEN VINYLACETAT COPOLYMER oder einem ähnlich zusammengesetzten elastomeren Werkstoff ohne Weichmacheranteile.

Hierdurch wird eine zusätzliche Abstützung der zu haltenden Glasscheiben im unteren Eckbereich und gegebenenfalls ein Schutz der Scheiben im oberen Eckbereich der jeweiligen Klemmvorrichtungen in besonders zuverlässiger Weise erreicht.

Besonders vorteilhaft ist bei der Ausführungsform nach den Ansprüchen 18 bis 22, daß die Glasplatten, insbesondere wenn sie als gewölbte Verbundsicherheits-Glasscheiben ausgebildet sind, von den konvex gewölbten Polstern an den Klemmbacken der Klemmvorrichtungen nicht vollflächig, sondern vielmehr nur linien- oder streifenförmig erfaßt werden. Hierdurch werden an den Einspannstellen der Glasplatten durch die Klemmvorrichtungen keine zusätzlichen Spannungen erzeugt, die sonst zu einer Beschädigung der Glasplatten ebenso wie zu einer Beeinträchtigung der Dauerhaftigkeit und Sicherheit der Klemmhalterungen führen würden.

Üblicherweise ist die Anlage- oder Haltefläche des Polsters im Querschnitt kreisbogenförmig gewölbt. Je nach der Wölbung der Verbundsicherheits-Glasplatte kann es aber auch von Vorteil sein, wenn die Anlage- oder Haltefläche des Polsters im Querschnitt ellipsenförmig oder parabelförmig gewölbt ist. Das Polster kann dann jeweils entsprechend den hauptsächlich vorkommenden Beanspruchungen so an den Klemmbacken angeordnet werden, daß seine Klemmwirkung am Rand der Glasplatte optimal zur Wirkung kommt. Die Klemmwirkung kann dabei auch noch dadurch verbessert werden, daß das Polster parallel zu der konvex gewölbten Anlage- oder Haltefläche eine konkave Rückseite aufweist. Bei dieser Ausführungsform mit konkav gewölbter Rückseite ist es besonders wichtig, daß das rechteckige Polster aus einem in sich federnden, formbeständigen elastomeren Material besteht und im unbelasteten Zustand in einer rechteckigen Aufnahmevertiefung an der zugehörigen Klemmbacke mit seinen beiden parallelen Längsrändern mit seitlichem Spiel federnd abgestützt ist.

Besonders vorteilhaft ist es weiterhin, wenn das Basisteil der Klemmvorrichtung, wie schon weiter oben hervorgehoben, eine Rastverzahnung mit mehreren parallel zu der Längsachse der zylindrisch gewölbten Montagefläche nebeneinander ausgerichteten Rastrippen aufweist. Die Klemmvorrichtung findet durch das Basisteil als Scharnierzwischenteil mit der Rastverzahnung an Stützen und Pfosten mit einer planen Anlage einen besonders sicheren Halt und eine genaue winkelmäßige Fixierung der Klemmbacken beim Festziehen der Befestigungsschraube und gegen ein späteres Verdrehen aus der einmal festgelegten Klemmstellung in Bezug auf die Glasplatte. Bei Rundrohrstützen kann das Basisteil eine passende Ausrundung haben.

Zur sicheren und dauerhaften Befestigung der Klemmvorrichtung an einer ebenen Wand, wie zum Beispiel an einem Vierkant-Stützrohr, kann außerdem, wie ebenfalls oben erwähnt, zwischen den Klemmbacken und der vertikalen Wand ein Zwischenstück als Scharnierfunktion vorgesehen sein, das eine ebene Befestigungsfläche für die Wandbefestigung und an der den Klemmbacken zugewandten Seite eine zylindrische Anlagefläche mit parallel zueinander verlaufenden Rastverzahnungen zum Eingriff mit den parallel dazu ausgerichteten Rastrippen an der Montagefläche der Klemmbacken aufweist.

Auch bei der dritten Ausführungsform der erfindungsgemäßen Klemmvorrichtung kann mindestens eine der beiden Klemmbacken einen die Glasplatte unter- oder übergreifenden Stützsteg mit einem Stützpolster aus einem elastomeren Material für die Verbundsicherheits-Glasplatte aufweisen, wobei das Stützpolster vorteilhafterweise aus einem ETHYLEN VINYLACETAT COPOLYMER oder einem ähnlich zusammengesetzten elastomeren Werkstoff ohne Weichmacheranteile besteht.

Alle Klemmvorrichtungen sind somit in der Lage, sowohl plane als auch gebogene Glasscheiben mit allen vorkommenden Standard- und Spezialbiegungen in einem weiten Radienbereich sicher und verspannungsfrei festzuhalten.

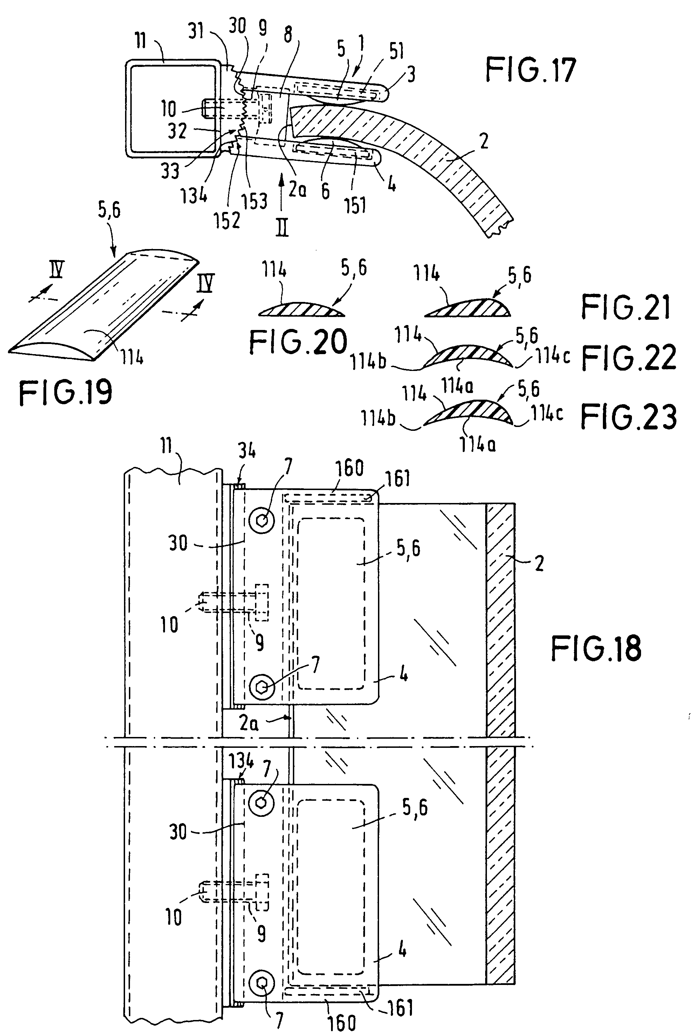

Bevorzugte Ausführungsbeispiele der Erfindung sind in der Zeichnung schematisch dargestellt. Es zeigen
- Fig. 1: eine Draufsicht auf eine Klemmvorrichtung zum Befestigen von Glasplatten, wobei zwischen den beiden Klemmbacken der Vorrichtung eine gewölbte Glasplatte aus Verbundsicherheitsglas festgehalten wird,
- Fig. 2: eine Seitenansicht zweier Klemmvorrichtungen in Richtung des Pfeiles II von Fig. 1, wobei die Glasplatte an der unteren Klemmvorrichtung in ihrem Eckbereich aufruht und an ihrem seitlichen Rand durch mindestens eine weitere Klemmvorrichtung festgehalten wird,
- Fig. 3 bis Fig. 13: verschiedene Ausführungsformen von Klemmelementen bei derartigen Klemmvorrichtungen, wobei

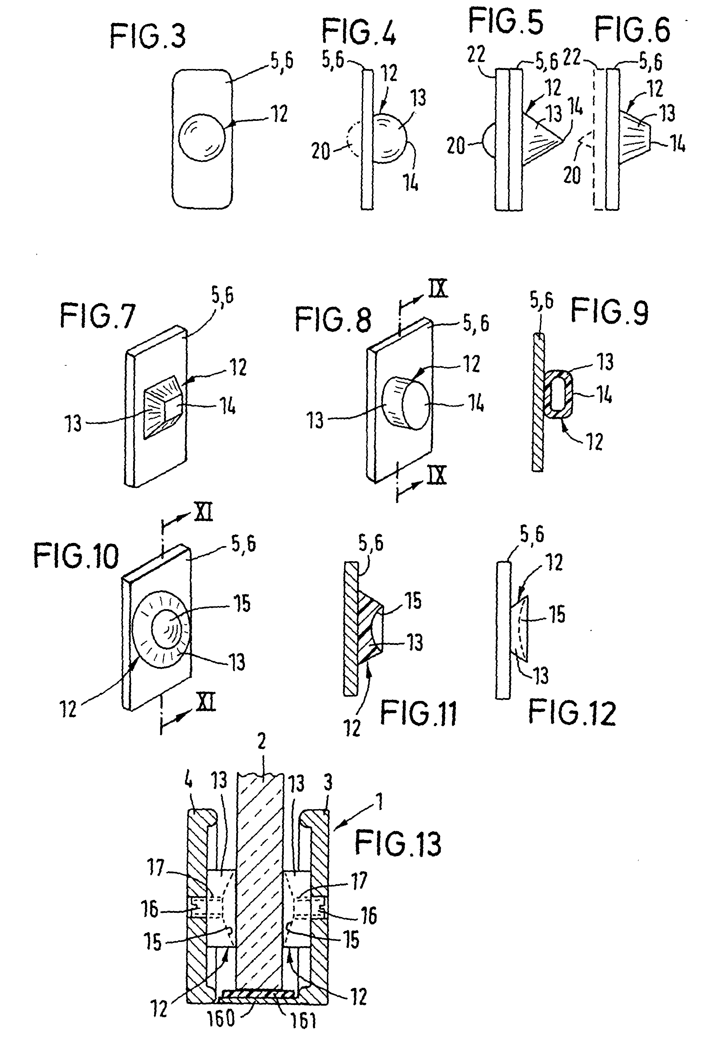

- Fig. 3: ein Klemmelement in Draufsicht,
- Fig. 4: dieses Klemmelement in Seitenansicht mit einem kugelförmigen Noppen,
- Fig. 5: ein weiteres Klemmelement mit kegelförmigem Noppen,
- Fig. 6: ein Klemmelement mit kegelstumpfförmigem Noppen,
- Fig. 7: eine perspektivische Ansicht eines Klemmelementes mit pyramidenförmigem Noppen,
- Fig. 8: ein Klemmelement mit zylindrischem Noppen,
- Fig. 9: einen Schnitt durch ein derartiges Klemmelement gemäß Schnittlinie IX - IX von Fig. 8,
- Fig. 10: ein Klemmelement mit einem kegelstumpfförmigen Noppen und einer endseitigen Vertiefung,
- Fig. 11: einen Schnitt durch dieses Klemmelement gemäß Schnittlinie XI - XI von Fig. 10,
- Fig. 12: eine Seitenansicht eines Klemmelementes mit nach außen hin kegelstumpfförmig vergrößertem Noppen und endseitiger Vertiefung und
- Fig. 13: einen senkrechten Schnitt durch eine Klemmvorrichtung mit zwei Klemmelementen mit saugnapfartiger Vertiefung zeigt, deren Volumen mittels einer Stellschraube, eines Stiftes oder dergleichen veränderbar ist;

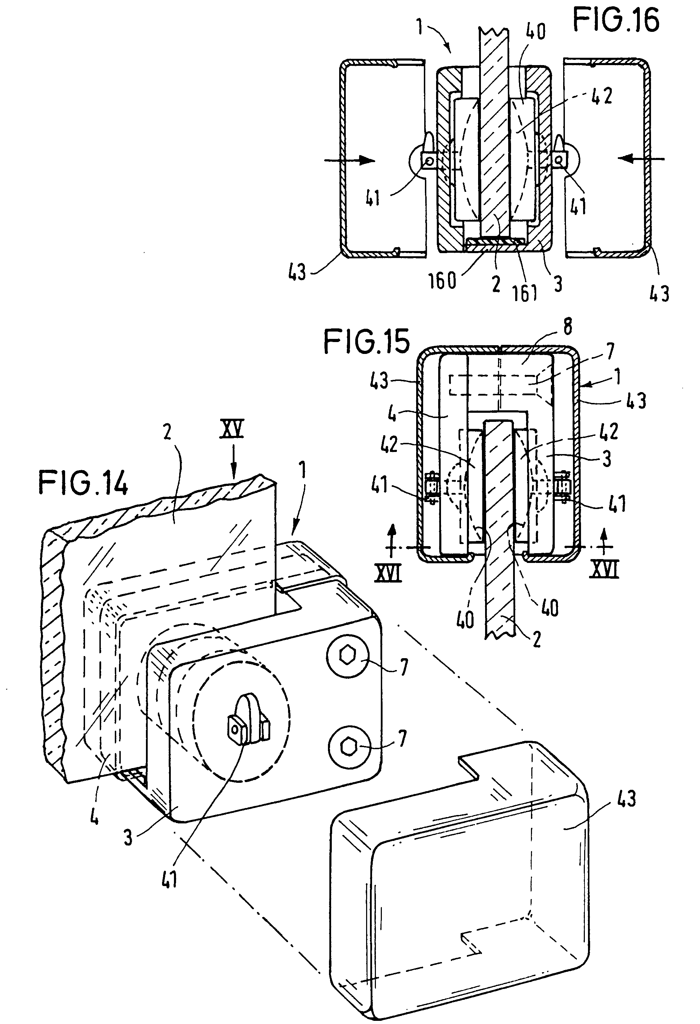

- Fig. 14: zeigt noch eine weiter abgewandelte Ausführungsform einer Klemmvorrichtung mit Saugnäpfen in einer perspektivischen Seitenansicht, wobei die Abdeckkappe einer Klemmbacke abgehoben gezeigt ist,
- Fig. 15: eine Draufsicht auf diese Klemmvorrichtung in Richtung des Pfeiles XV von Fig. 14, wobei die Abdeckkappen beider Klemmbacken geschnitten dargestellt sind,
- Fig. 16: einen Schnitt durch diese Klemmvorrichtung gemäß Schnittlinie XVI - XVI von Fig. 15,
während in Fig. 17 bis 23 besonders vorteilhafte Weiterbildungen der Erfindung gezeigt sind; hierbei zeigen
- Fig. 17: eine Draufsicht auf eine Klemmvorrichtung zum Befestigen von Glasplatten, wobei zwischen den beiden Klemmbacken der an einem Pfosten befestigten Vorrichtung eine gewölbte Glasplatte aus Verbundsicherheitsglas festgehalten wird,
- Fig. 18: eine Seitenansicht zweier Klemmvorrichtungen in Richtung des Pfeiles II von Fig. 17, wobei die Glasplatte an der unteren Klemmvorrichtung in ihrem Eckbereich aufruht und an ihrem seitlichen Rand oder im oberen Eckbereich durch mindestens eine weitere Klemmvorrichtung festgehalten wird,
- Fig. 19: eine perspektivische Ansicht eines im Grundriß rechteckigen Polsters, das an den Innenseiten jeder der beiden Klemmbacken angeordnet ist und mit einer konvex gewölbten Anlage- oder Haltefläche an der Verbundsicherheits-Glasplatte anliegt,
- Fig. 20: einen Querschnitt durch das Polster gemäß Schnittlinie IV - IV in Fig. 19,
- Fig. 21: einen Fig. 20 entsprechenden Querschnitt durch ein solches Polster mit einer ellipsen- oder parabelförmig gewölbten Anlage- oder Haltefläche,
- Fig. 22: einen Schnitt durch ein derartiges Polster mit einer konkav gewölbten Unterseite und
- Fig. 23: einen weiteren Schnitt durch ein solches Polster in einer nochmals abgewandelten Ausführungsform.

Bei den gezeigten Ausführungsbeispielen handelt es sich um Klemmvorrichtungen 1 zum Befestigen von gebogenen oder planen Glasplatten 2, die insbesondere für Glasplatten aus Verbund- sicherheitsglas bestimmt sind. Jede Klemmvorrichtung 1 besteht aus zwei am seitlichen Rand der zu befestigenden Glasplatte 2 ansetzbaren Klemmbacken 3, 4, die an ihren Innenseiten Polster 5, 6 aus elastomerem Material aufweisen. Die beiden Klemmbacken 3, 4 sind von mindestens einer Klemmschraube 7 gegeneinander spannbar, wobei eine Klemmbacke 3, 4 ein dazu rechtwinklig stehendes Basisteil 8 aufweist mit mindestens einer mittig angeordneten länglichen Haltebohrung 9, so daß die Klemmvorrichtung mittels einer durch diese Haltebohrung hindurchgeführten Befestigungsschraube 10 an einer vertikalen Wand 11, einem Pfosten oder dergleichen angeschraubt werden kann. Die Polster 5, 6 an den Innenseiten der beiden Klemmbacken 3, 4 haben eine asymmetrische Grundfläche mit einem Seiten-Längenverhältnis von 1 : 2,5 gemäß DIN 18 516 Teil 4.

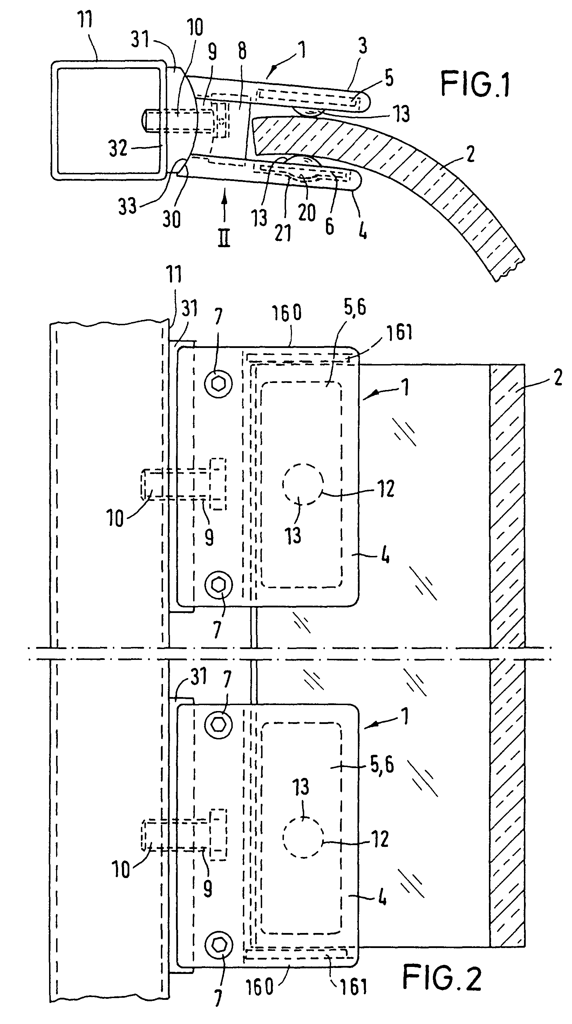

Wie in Fig. 1 bis 13 im einzelnen zu erkennen ist, weist das Polster 5, 6 mindestens einer Klemmbacke 3, 4 mindestens ein Klemmelement 12 in Form eines vom Polster 5, 6 gegen die Glasplatte vorspringenden Noppens 13 mit einer von dem Polster 3, 4 abgesetzten, an der Glasplatte 2 punktförmig angreifenden stirnseitigen Anlage- oder Haltefläche 14 auf.

In einer bevorzugten Ausführungsform der Erfindung weist jedoch das Polster 5, 6 jeder der beiden Klemmbacken 3, 4 mindestens einen derartigen Noppen 13 auf.

Beim Vorhandensein nur eines einzigen Noppens 13 ist dieser an dem Polster 5, 6 mittig angeordnet. Er kann kugelförmig oder kugelkappenförmig gewölbt sein. Er kann aber auch keil- oder pyramidenförmig ausgebildet oder kegel- oder kegelstumpfförmig gestaltet sein. Es ist aber auch möglich, daß der Noppen 13 zylindrisch oder quaderförmig ausgebildet ist.

Während der Noppen 13 bei den Ausführungsformen von Fig. 1 bis 9 zumeist flächig an der Glasplatte 2 anliegt, weist er bei den in Fig. 10 bis 13 gezeigten Ausführungsbeispielen an seiner Anlage- oder Haltefläche eine saugnapfartige Vertiefung 15 auf, die mit einer verformbaren Silikonmasse gefüllt sein kann. Das Volumen dieser Vertiefung 15 verringert sich aufgrund der Elastizität des Polsters 5, 6 und insbesondere des Noppens 13 beim Andrücken der Klemmbacken 3, 4 an die zu haltende Glasplatte 2, so daß diese durch die in die Vertiefung 15 des Noppens 13 eingebrachte Silikonmasse besonders sicher elastisch und spannungsfrei dauerhaft festgehalten wird.

Der Hohlraum der saugnapfartigen Vertiefung 15 kann aber auch, wie in Fig. 13 gezeigt ist, in seinem Volumen einstellbar sein, und zwar insbesondere mittels einer in einer Bohrung 17 gelagerten Stellschraube 16, eines Stellstiftes oder dergleichen, so daß die Haltekraft der Klemmvorrichtung ergänzend zu der elastischen Verformung des Noppens 13 beim Festspannen der beiden Klemmbacken 3, 4 durch den in der Vertiefung 15 erzeugten Unterdruck noch zusätzlich verstärkt wird.

Gerade bei gebogenem Verbundsicherheitsglas muß Wert darauf gelegt werden, daß die Haltekräfte der Klemmvorrichtungen hicht durch Druck, sondern durch einen spannungsfreien Sog auf das zu haltende Element erzeugt werden. Die Klemmschrauben 7 haben daher lediglich die Aufgabe, die beiden Klemmbacken 3, 4 fest miteinander zu verbinden, ohne daß jedoch Druck auf das zu klemmende Element ausgeübt wird.

Für die Saugnapf-Halterung gilt außerdem, je kleiner der Durchmesser der saugnapfartigen Vertiefung 15 ist, desto größer ist die Halteenergie, die pro Flächeneinheit an der Glasscheibe aufgebracht wird. Es gilt weiterhin: je geringer die Angriffsfläche auf das zu haltende Element ist, desto geringer ist die Verspannungsenergie. Besonders bedeutsam ist in diesem Zusammenhang, daß bei gebogenem Glas im Tangentialpunkt, das heißt im eng begrenzten Angriffsbereich der saugnapfartigen Vertiefung 15 die Biegung des Glases vernachlässigbar gering ist. Im Grunde genommen ist in diesem Bereich eine ebene Fläche vorhanden, so daß der Saugnapf seine Haltekraft voll entwickeln kann.

In Ergänzung der vorstehend beschriebenen Ausführungsformen kann das Klemmelement an jeder Klemmbacke in einer weiteren Ausführungsform der Erfindung auch noch kippbar gelagert sein. Dabei ist der Noppen 13, wie in Fig. 1 und in Fig. 4 gestrichelt angedeutet ist, mit einem kugel-, keil- oder kegelförmig gestalteten rückseitigen Stützansatz 20 in einer demgegenüber räumlich größer bemessenen Vertiefung 21 an der Klemmbacke 3, 4 zentral abgestützt und mit seitlichem Spiel in seiner Lage derart veränderbar, daß sich das Klemmelement 12 als solches oder zusätzlich zu der punktförmigen Anlage des Noppens 13 an der Glasscheibenoberfläche auch noch ohne jede schädliche Verspannung auf etwaige Maßabweichungen oder Formungenauigkeiten der Glasscheibe einstellen kann, was insbesondere bei gebogenen Glasplatten von Vorteil ist und zur Vermeidung von fertigungsbedingtem Ausschuß beiträgt.

Der rückseitige Stützansatz 20 an dem Klemmelement 12 besteht ebenso wie der gegen die Glasplatte 2 vorspringende Noppen 13 aus elastomerem Werkstoff und ist einteilig mit dem Noppen 13 so ausgebildet, daß der Noppen 13 eine Shore-Härte von etwa 60° und der Stützansatz 20 eine größere Shore-Härte zwischen 60° und 80° aufweist.

Anstelle einer einteiligen Ausbildung des Klemmelementes 12 mit Noppen 13 und diesem an der Rückseite des Klemmelementes gegenüberliegendem Stützansatz 20 kann das Klemmelement 12 auch zweiteilig aus einem Metallteil 22 mit Stützansatz 20 und einem daran durch Kleben oder mechanische Klemmbefestigung angebrachten Polster mit Noppen 13 bestehen, wie in Fig. 5 und 6 gezeigt ist.

Zur Montage an gewölbten Wandflächen, wie beispielsweise an Rundrohr-Stützen, weist das Basisteil 8 an einer der beiden Klemmbacken 3, 4 eine zylindrisch gewölbte Montagefläche 30 und eine quer dazu ausgerichtete längliche Bohrung 9 für die Befestigung auf, so daß die Klemmvorrichtung an jeglicher Art Stützen in jeder gewünschten Winkelstellung zur Glasscheibe hin ausgerichtet werden kann.

Bei der in Fig. 14 bis 16 gezeigten weiteren Ausführungsform der Erfindung ist ähnlich wie bei dem Ausführungsbeispiel von Fig. 13 an mindestens einer Klemmbacke 3, 4 mindestens ein Saugnapf 40 aus elastomerem Material angeordnet, der für die Befestigung der Glasplatte 2 nach deren Montage in seinem Volumen veränderbar ist.

Hierbei weist jeder Saugnapf 40 ein von der Rückseite der Klemmbacke 3, 4 zugängliches Stellelement 41, wie einen umklappbaren Stellhebel oder dergleichen, zur Erhöhung des Unterdruckes in dem Hohlraum 42 des Saugnapfes 40 auf.

Dieses Stellelement 41 ist durch eine Abdeckkappe 43 an der Außenseite jeder der beiden Klemmbacken 3, 4 abgedeckt. Das Basisteil 8 weist eine zylindrisch gewölbte Montagefläche 30 für die Wandbefestigung auf.

Bei allen gezeigten Ausführungsformen kann zusätzlich ein Zwischenstück 31 mit einer ebenen Befestigungsfläche 32 für die Wandbefestigung, beispielsweise an einem Vierkant-Stützrohr, vorgesehen sein, wie in Fig. 1 und 2 gezeigt ist. Dieses Zwischenstück 31 hat eine reine Scharnierfunktion und weist an der den Klemmbacken 3, 4 zugewandten Seite eine zylindrische Anlagefläche 33 für die entsprechend gewölbte Montagefläche 30 an der Klemmvorrichtung 1 auf, so daß die Klemmvorrichtung 1 auch an ebenen Wandflächen in jeder gewünschten Winkellage auf die zu haltende gebogene Glasscheibe ausgerichtet werden kann.

In den Ausführungsformen von Fig. 2, Fig. 13 und Fig. 16 weist die jeweils hintere Klemmbacke einen die Glasplatte 2 untergreifenden Stützsteg 160 auf mit einem Stützpolster 161 auf, das aus einem ETHYLEN VINYLACETAT COPOLYMER mit einem Anteil an VINYLACETAT (VA) von etwa 17 bis 42% oder aus einem ähnlich zusammengesetzten elastomeren Werkstoff ohne Weichmacheranteile besteht.

Die in Fig. 17 bis Fig. 23 gezeigte dritte Ausführungsform einer Klemmvorrichtung 1 besteht ebenfalls aus zwei am Rand 2a der zu befestigenden Glasplatte 2 ansetzbaren Klemmbacken 3, 4, die an ihren Innenseiten Polster 5, 6 aus elastomerem Material aufweisen. Beide Klemmbacken 3, 4 werden von mindestens einer Klemmschraube 7 gegeneinander gespannt. Eine der beiden Klemmbacken 3, 4 weist ein rechtwinklig zu dieser Klemmbacke stehendes Basisteil 8 auf, das eine Haltebohrung 9 hat und mittels einer durch diese hindurchgeführten Befestigungsschraube 10 an eine vertikale Wand 11, einen Pfosten oder dergleichen angeschraubt werden kann.

Jedes Polster 5, 6 hat, wie in Fig. 18 und 19 gezeigt ist, eine rechteckig längliche Form und liegt mit einer konvex gewölbten Anlage- oder Haltefläche 114, die als Klemmfläche dient, an der Glasplatte 2 parallel zu deren Rand 2a beziehungsweise zu deren Wölbung linien- oder streifenförmig an.

Die Anlage- oder Haltefläche 114 des Polsters 5, 6 kann im Querschnitt entweder kreisbogenförmig (Fig. 17, 19, 20 und 22), ellipsenförmig oder parabelförmig (Fig. 21 und 23) gewölbt sein.

Das Polster 5, 6 kann außerdem parallel zu der konvex gewölbten Anlage- oder Haltefläche 114 eine konkave Rückseite 114a (Fig. 22 und 23) aufweisen, die ganz nach Bedarf im Querschnitt kreisbogenförmig, ellipsen- oder parabelförmig gewölbt sein kann.

Das rechteckige Polster 5, 6 mit konkav gewölbter Rückseite 114a besteht aus einem in sich federnden, formbeständigen elastomeren Material und ist im unbelasteten Zustand in einer rechteckigen Aufnahmevertiefung 151 an der zugehörigen Klemmbacke 5, 6 mit seinen beiden parallelen Längsrändern 114b, 114c mit seitlichem Spiel federnd abgestützt. Hierdurch kann erforderlichenfalls eine in sich federnde Abstützung der Verbundglasplatte 2 zwischen den beiden Klemmbacken 5, 6 der Klemmvorrichtung 1 erreicht werden.

Wie in Fig. 17 weiterhin zu erkennen ist, hat das Basisteil 8 der Klemmvorrichtung 1 eine zylindrisch gewölbte Montagefläche 30 sowie eine quer dazu ausgerichtete längliche Bohrung 9 für die Befestigungsschraube 10, wobei das Basisteil 8 eine Rastverzahnung 152 mit mehreren parallel zu der Längsachse der zylindrisch gewölbten Montagefläche 30 nebeneinander ausgerichteten Rastrippen 153 aufweist.

Außerdem ist zwischen den beiden Klemmbacken 3, 4 der Klemmvorrichtung 1 und der vertikalen Wand 11 ein Zwischenstück 31 als Scharnierfunktion vorgesehen, das eine ebene Befestigungsfläche 32 für die Wandbefestigung hat und an der den Klemmbacken 3, 4 zugewandten Seite eine zylindrische Anlagefläche 33 mit parallel zueinander verlaufenden Rastverzahnungen 134 zum Eingriff mit den parallel dazu ausgerichteten Rastrippen 153 an der Montagefläche 30 der Klemmbacken 3, 4 aufweist.

Mindestens eine der beiden Klemmbacken 3, 4 weist außerdem einen die Glasplatte 2 unter- oder übergreifenden Stützsteg 160 mit einem Stützpolster 161 aus einem elastomeren Material für die Verbundsicherheits-Glasplatte 2 auf.

Das Stützpolster 161 besteht aus einem ETHYLEN VINYLACETAT COPOLYMER mit einem Anteil an VINYLACETAT (VA) von etwa 17 bis 42% oder aus einem ähnlich zusammengesetzten elastomeren Werkstoff ohne Weichmacheranteile.

### Liste der Bezugszeichen

- 1: Klemmvorrichtung
- 2: Glasplatte
- 3: Klemmbacke
- 4: Klemmbacke
- 5: Polster
- 6: Polster
- 7: Klemmschraube
- 8: Basisteil
- 9: Haltebohrung
- 10: Befestigungsschraube
- 11: Wand, Pfosten oder dergleichen
- 12: Klemmelement
- 13: Noppen
- 14: Anlaqe- oder Haltefläche
- 15: Vertiefung
- 16: Stellschraube, Stellstift
- 17: Bohrung

- 20: Stützansatz
- 21: Vertiefung
- 22: Metallteil

- 30: Montagefläche
- 31: Zwischenstück
- 32: Befestigungsfläche
- 33: Anlagefläche

- 40: Saugnapf
- 41: Stellelement
- 42: Hohlraum
- 43: Abdeckkappe

- 114: Anlage- oder Haltefläche
- 114a: Rückseite
- 114b: Längsrand
- 114c: Längsrand

- 134: Rastverzahnungen

- 151: Aufnahmevertiefung
- 152: Rastverzahnung
- 153: Rastrippen

- 160: Stützsteg
- 161: Stützpolster

## Patentansprüche

1. Klemmvorrichtung (1) zum Befestigen von Glasplatten (2), insbesondere Glasplatten aus gebogenem und planem Verbundsicherheitsglas, mit zwei am Rand der zu befestigenden Glasplatte ansetzbaren Klemmbacken (3, 4), die an ihren Innenseiten Polster (5, 6) aus elastomerem Material aufweisen und die von mindestens einer Klemmschraube (7) gegeneinander spannbar sind und von denen eine Klemmbacke ein rechtwinklig zu dieser Klemmbacke stehendes Basisteil (8) aufweist, das eine Haltebohrung (9) hat und mittels einer durch diese hindurchgeführten Befestigungsschraube (10) an eine vertikale Wand (11), einen Pfosten oder dergleichen anschraubbar ist, dadurch gekennzeichnet daß
a) das Polster (5, 6) mindestens einer Klemmbacke (3, 4) mindestens ein Klemmelement (12) in Form eines gegen die Glasplatte (2) vorspringenden Noppens (13) mit einer von dem Polster (5, 6) abgesetzten, an der Glasplatte (2) punktförmig angreifenden stirnseitigen Anlage- oder Haltefläche (14) aufweist,
b) an der verbleibenden Klemmbacke (3, 4) mindestens ein Klemmelement (12) kippbar gelagert ist, das aus elastomerem Material oder aus einem Metallteil (22) besteht, das mit elastomerem Material beschichtet ist oder ein aufgeklebtes oder durch formschlüssigen Eingriff befestigtes Polster (5, 6) für die Anlage an der Glasplatte (2) aufweist.

2. Klemmvorrichtung nach Anspruch 1, **dadurch gekennzeichnet,** daß der Noppen (13) an dem Polster (5, 6) mittig angeordnet ist.

3. Klemmvorrichtung nach Anspruch 1, **dadurch gekennzeichnet,** daß der Noppen (13) kugelförmig oder kugelkappenförmig gewölbt ist.

4. Klemmvorrichtung nach Anspruch 1, **dadurch gekennzeichnet,** daß der Noppen (13) keil- oder pyramidenförmig ausgebildet ist.

5. Klemmvorrichtung nach Anspruch 1, **dadurch gekennzeichnet,** daß der Noppen (13) kegel- oder kegelstumpfförmig ausgebildet ist.

6. Klemmvorrichtung nach Anspruch 1, **dadurch gekennzeichnet,** daß der Noppen (13) zylindrisch oder quaderförmig ausgebildet ist.

7. Klemmvorrichtung nach Anspruch 1, **dadurch gekennzeichnet,** daß der Noppen (13) an seiner Anlage- oder Haltefläche (14) eine saugnapfartige Vertiefung (15) aufweist.

8. Klemmvorrichtung nach Anspruch 7, **dadurch gekennzeichnet,** daß die saugnapfartige Vertiefung (15) mit einer verformbaren Silikonmasse gefüllt ist.

9. Klemmvorrichtung nach Anspruch 7, **dadurch gekennzeichnet,** daß der Hohlraum der saugnapfartigen Vertiefung (15) in seinem Volumen einstellbar ist.

10. Klemmvorrichtung nach Anspruch 9, **dadurch gekennzeichnet,** daß der Hohlraum der saugnapfartigen Vertiefung (15) mittels einer am Polster (5, 6) in einer Bohrung (17) gelagerten Stellschraube (16), eines Stellstiftes oder dergleichen veränderbar ist.

11. Klemmvorrichtung nach Anspruch 1, **dadurch gekennzeichnet**, daß jedes Klemmelement (12) einen gegen die zugehörige Klemmbacke (3, 4) gerichteten, kugel-, keil- oder kegelförmig gestalteten rückseitigen Stützansatz (20) aufweist, der in einer demgegenüber räumlich größer bemessenen Vertiefung (21) an der Klemmbacke (3, 4) zentral abgestützt und mit seitlichem Spiel kippbar gelagert ist.

12. Klemmvorrichtung nach Anspruch 11, **dadurch gekennzeichnet**, daß der rückseitige Stützansatz (20) an dem Klemmelement (12) zusammen mit dem gegen die Glasplatte (2) vorspringenden Noppen (13) aus elastomerem Werkstoff derart ausgebildet ist, daß der Noppen (13) eine Shore-Härte von etwa 60° und der Stützansatz (20) eine größere Shore-Härte zwischen 60° und 80° aufweist.

13. Klemmvorrichtung (1) zum Befestigen von Glasplatten (2), insbesondere Glasplatten aus gebogenem und planem Verbundsicherheitsglas, mit zwei am seitlichen Rand der zu befestigenden Glasplatte ansetzbaren Klemmbacken (3, 4), die an ihren Innenseiten Polster (5, 6) aus elastomerem Material aufweisen und die von mindestens einer Klemmschraube (7) gegeneinander spannbar sind und von denen eine Klemmbacke ein rechtwinklig zu dieser Klemmbacke stehendes Basisteil (8) aufweist, das eine Haltebohrung (9) hat und mittels einer durch diese hindurchgeführten Befestigungsschraube (10) an eine vertikale Wand (11), einen Pfosten oder dergleichen anschraubbar ist, **dadurch gekennzeichnet**, daß an mindestens einer Klemmbacke (3, 4) mindestens ein Saugnapf (40) aus elastomerem Material angeordnet ist, der für die Befestigung der Glasplatte (2) nach deren Montage in seinem Volumen veränderbar ist.

14. Klemmvorrichtung nach Anspruch 13, **dadurch gekennzeichnet**, daß jeder Saugnapf (40) ein von der Rückseite der Klemmbacke (3, 4) zugängliches Stellelement (41), wie einen umklappbaren Stellhebel oder dergleichen, zur Erhöhung des Unterdruckes in dem Hohlraum (42) des Saugnapfes (40) aufweist.

15. Klemmvorrichtung nach Anspruch 13 und 14, **dadurch gekennzeichnet**, daß das Stellelement (41) durch eine Abdeckkappe (43) an der Außenseite der Klemmbacke (3, 4) abgedeckt ist.

16. Klemmvorrichtung nach Anspruch 1 oder 13, **dadurch gekennzeichnet**, daß das Basisteil (8) der Klemmvorrichtung (1) eine zylindrisch gewölbte Montagefläche (30) und ein quer dazu ausgerichtetes Langloch als Haltebohrung (9) für die Befestigung aufweist.

17. Klemmvorrichtung nach Anspruch 1 oder 13, **dadurch gekennzeichnet**, daß ein Zwischenstück (31) als Scharnierfunktion vorgesehen ist, das eine ebene Befestigungsfläche (32) für die Wandbefestigung und eine zylindrische Anlagefläche (33) an der den Klemmbacken (3, 4) zugewandten Seite für die entsprechend gestaltete Montagefläche (30) an der Klemmvorrichtung (1) aufweist.

18. Klemmvorrichtung (1) zum Befestigen von Glasplatten (2), insbesondere von Glasplatten aus gebogenem und planem Verbundsicherheitsglas, mit zwei am Rand der zu befestigenden Glasplatte ansetzbaren Klemmbacken (3, 4), die an ihren Innenseiten Polster (5, 6) aus elastomerem Material aufweisen, die von mindestens einer Klemmschraube (7) gegeneinander spannbar sind und von denen eine Klemmbacke ein rechtwinklig zu dieser Klemmbacke stehendes Basisteil (8) aufweist, das eine Haltebohrung (9) hat und mittels einer durch diese hindurchgeführten Befestigungsschraube (10) an eine vertikale Wand (11), einen Pfosten oder dergleichen anschraubbar ist, dadurch gekennzeichnet, daß
a) jedes Polster (5, 6) eine rechteckig längliche Form, hat,
b) das Polster (5, 6) mindestens einer Klemmbacke (3, 4) mit einer konvex gewölbten Anlage- oder Haltefläche (14) an der Glasplatte (2) parallel zu deren Rand (2a) beziehungsweise zu deren Wölbung linien- oder streifenförmig anliegt.

19. Klemmvorrichtung nach Anspruch 18, **dadurch gekennzeichnet**, daß die Anlage- oder Haltefläche (14) des Polsters (5, 6) im Querschnitt kreisbogenförmig gewölbt ist.

20. Klemmvorrichtung nach Anspruch 18 oder 19, **dadurch gekennzeichnet**, daß die Anlage- oder Haltefläche (14) des Polsters (5, 6) im Querschnitt ellipsenförmig oder parabelförmig gewölbt ist.

21. Klemmvorrichtung nach einem der Ansprüche 18 bis 20, **dadurch gekennzeichnet**, daß das Polster (5, 6) parallel zu der konvex gewölbten Anlage- oder Haltefläche (114) eine konkave Rückseite (14a) aufweist.

22. Klemmvorrichtung nach Anspruch 21, **dadurch gekennzeichnet**, daß das rechteckige Polster (5, 6) aus einem in sich federnden, formbeständigen elastomeren Material besteht und im unbelasteten Zustand in einer rechteckigen Aufnahmevertiefung (151) an der zugehörigen Klemmbacke (3, 4) mit seinen beiden parallelen Längsrändern (114b, 114c) mit seitlichem Spiel federnd abgestützt ist.

23. Klemmvorrichtung zum Befestigen von Glasplatten, insbesondere von Glasplatten aus gebogenem und planem Verbundsicherheitsglas, nach einem oder mehreren der Ansprüche 1 bis 22, **dadurch gekennzeichnet,** daß das Basisteil (8) eine Rastverzahnung (152) mit mehreren parallel zu der Längsachse der zylindrisch gewölbten Montagefläche (30) nebeneinander ausgerichteten Rastrippen (153) aufweist.

24. Klemmvorrichtung nach Anspruch 23, **dadurch gekennzeichnet**, daß zwischen den Klemmbacken (3, 4) und der vertikalen Anschraubfläche ein Zwischenstück (31) als Scharnierfunktion vorgesehen ist, das eine ebene Befestigungsfläche (32) für die Wandbefestigung und an der den Klemmbacken (3, 4) zugewandten Seite eine zylindrische Anlagefläche (33) mit parallel zueinander verlaufenden Rastverzahnungen (134) zum Eingriff mit den parallel dazu ausgerichteten Rastrippen (153) an der Montagefläche (30) der Klemmbakken (3, 4) aufweist.

25. Klemmvorrichtung nach einem oder mehreren der Ansprüche 1 bis 24, wobei mindestens eine der beiden Klemmbacken einen die Glasplatte unter- oder übergreifenden Stützsteg mit einem Stützpolster aus einem elastomeren Material für die Verbundsicherheits-Glasplatte aufweist, **dadurch gekennzeichnet**, daß das Stützpolster (161) aus einem ETHYLEN VINYLACETAT COPOLYMER oder einem ähnlich zusammengesetzten elastomeren Werkstoff ohne Weichmacheranteile besteht.

## Claims

1. Gripping device (1) for fastening glass plates (2), in particular glass plates made of curved and flat composite safety glass, the said device having two gripping jaws (3, 4) which can be attached at the lateral edge of the glass plate (2) to be fastened, have pads (5, 6) made of elastomeric material on their inner sides and can be clamped against one another by at least one gripping screw (7), and of which one gripping jaw has a base part (8) which stands at right angles to the said gripping jaw and has a holding bore (9) and which can be screwed onto a vertical wall (11), an upright or the like by means of a fastening screw (10) which is passed through the said holding bore, characterised in that
a) the pad (5, 6) of at least one gripping jaw (3, 4) has at least one gripping element (12) in the form of a knob (13) which projects towards the glass plate (2) and has an end-face abutting or holding face (14) which is offset from the pad (5, 6) and acts on the glass plate (2) in a punctiform manner,
b) there is tiltably mounted on the remaining gripping jaw (3, 4) at least one gripping element (12) which consists of elastomeric material or of a metal part (22) which is coated with elastomeric material or has a pad (5, 6), which is stuck on or fastened by form-locking engagement, for abutment against the glass plate (2).

2. Gripping device according to claim 1, characterised in that the knob (13) is disposed centrally on the pad (5, 6).

3. Gripping device according to claim 1, characterised in that the knob (13) is arched in a spherical or spherical-cap-shaped manner.

4. Gripping device according to claim 1, characterised in that the knob (13) is of wedge-shaped or pyramid-shaped construction.

5. Gripping device according to claim 1, characterised in that the knob (13) is of conical or frustoconical construction.

6. Gripping device according to claim 1, characterised in that the knob (13) is of cylindrical or parallelepipedal construction.

7. Gripping device according to claim 1, characterised in that the knob (13) has a suction-cup-like depression (15) on its abutting or holding face (14).

8. Gripping device according to claim 7, characterised in that the suction-cup-like depression (15) is filled with a deformable silicone compound.

9. Gripping device according to claim 7, characterised in that the cavity of the suction-cup-like depression (15) is adjustable in its volume.

10. Gripping device according to claim 9, characterised in that the cavity of the suction-cup-like depression (15) can be varied by means of a setting screw (16) mounted on the pad (5, 6) in a bore (17), or by means of a setting pin or the like.

11. Gripping device according to claim 1, characterised in that each gripping element (12) has a supporting extension (20) which is directed towards the appertaining gripping jaw (3, 4) and is shaped in a spherical, wedge-shaped or conical manner and which is supported centrally, and mounted tiltably with lateral play, in a depression (21) on the gripping jaw (3, 4) of spatially greater dimensions than the said extension.

12. Gripping device according to claim 11, characterised in that the supporting extension (20) on the rear side of the gripping element (12), together with the knob (13) projecting towards the glass plate (2), is constructed of elastomeric material in such a way the said knob (13) has a Shore hardness of about 60° and the supporting extension (20) has a greater Shore hardness of between 60° and 80°.

13. Gripping device (1) for fastening glass plates (2), in particular glass plates made of curved and flat composite safety glass, the said device having two gripping jaws (3, 4) which can be attached at the lateral edge of the glass plate (2) to be fastened, have pads (5, 6) made of elastomeric material on their inner sides and can be clamped against one another by at least one gripping screw (7), and of which one gripping jaw has a base part (8) which stands at right angles to the said gripping jaw and has a holding bore (9) and which can be screwed onto a vertical wall (11), an upright or the like by means of a fastening screw (10) which is passed through the said holding bore, characterised in that at least one suction cup (40) which is made of elastomeric material and can be varied in its volume for fastening the glass plate (2) after the mounting of the latter, is disposed on at least one gripping jaw (3, 4).

14. Gripping device according to claim 13, characterised in that each suction cup (40) has a setting element (41) which is accessible from the rear side of the gripping jaw (3, 4), such as a folding setting lever or the like, for increasing the negative pressure in the cavity (42) of the suction cup (40).

15. Gripping device according to claims 13 and 14, characterised in that the setting element (41) is covered by a covering cap (43) on the outer side of the gripping jaw (3, 4).

16. Gripping device according to claim 1 or 13, characterised in that the base part (8) of the gripping device (1) has a cylindrically arched mounting face (30) and a slot, which is orientated transversely thereto, as a holding bore (9) for the fastening system.

17. Gripping device according to claim 1 or 13, characterised in that an intermediate piece (31) performing the function of a hinge is provided, which has a flat fastening face (32) for wall-fastening and, on the side facing towards the gripping jaws (3, 4), a cylindrical abutting face (33) for the correspondingly shaped mounting face (30) on the gripping device (1).

18. Gripping device (1) for fastening glass plates (2), in particular glass plates made of curved and flat composite safety glass, the said device having two gripping jaws (3, 4) which can be attached at the edge of the glass plate (2) to be fastened, have pads (5, 6) made of elastomeric material on their inner sides and can be clamped against one another by at least one gripping screw (7), and of which one gripping jaw has a base part (8) which stands at right angles to the said gripping jaw and has a holding bore (9) and which can be screwed onto a vertical wall (11), an upright or the like by means of a fastening screw (10) which is passed through the said holding bore, characterised in that
a) each pad (5, 6) has a rectangularly elongated shape,
b) the pad (5, 6) of at least one gripping jaw (3, 4) abuts, via a convexly arched abutting or holding face (14), against the glass plate (2) in a linear or strip-shaped manner, parallel to its edge (2a) or to its convexity.

19. Gripping device according to claim 18, characterised in that the abutting or holding face (14) of the pad (5, 6) is arched in an arcuate manner in cross-section.

20. Gripping device according to claim 18 or 19, characterised in that the abutting or holding face (14) of the pad (5, 6) is arched in an elliptical or parabolic manner in cross-section.

21. Gripping device according to one of claims 18 to 20, characterised in that the pad (5, 6) has a concave rear side (14a) parallel to the convexly arched abutting or holding face (114).

22. Gripping device according to claim 21, characterised in that the rectangular pad (5, 6) consists of an inherently resilient elastomeric material of stable shape and, in the non-loaded condition, is resiliently supported, with lateral play, in a rectangular receiving depression (151) on the appertaining gripping jaw (3, 4) via its two parallel longitudinal edges (114b, 114c).

23. Gripping device for fastening glass plates, in particular glass plates made of curved and flat composite safety glass, according to one or more of claims 1 to 22, characterised in that the base part (8) has a latching toothing system (152) with a number of latching ribs (153) which are orientated side by side, parallel to the longitudinal axis of the cylindrically arched mounting face (30).

24. Gripping device according to claim 23, characterised in that there is provided, between the gripping jaws (3, 4) and the vertical screwing-on face, an intermediate piece (31) performing the function of a hinge, which has a flat fastening face (32) for wall-fastening and, on the side facing towards the gripping jaws (3, 4), a cylindrical abutting face (33) with latching toothing systems (134) running parallel to one another for engagement with the latching ribs (153), which are orientated parallel thereto, on the mounting face (30) of the said gripping jaws (3, 4).

25. Gripping device according to one or more of claims 1 to 24, at least one of the two gripping jaws having a supporting web which engages under or over the glass plate and has a supporting pad made of an elastomeric material for the composite safety-glass plate, characterised in that the supporting pad (161) consists of an ETHYLENE-VINYL ACETATE COPOLYMER or of an elastomeric material of similar composition without plasticiser components.

## Revendications

1. Dispositif de serrage (1) pour la fixation de pans de verre (2), en particulier des pans de verre constitués par du verre de sécurité feuilleté courbe et plat, comprenant deux mâchoires de serrage (3, 4) aptes à venir s'appliquer contre le bord du pan de verre à fixer, qui présentent, sur leurs côtés internes, un rembourrage (5, 6) constitué d'une matière élastomère et qui peuvent être serrées l'une contre l'autre à l'aide d'au moins une vis de serrage (7), une mâchoire de serrage présentant une partie de base (8) disposée en position perpendiculaire à cette mâchoire de serrage, qui possède un alésage de retenue (9) et qui peut être vissée contre une paroi verticale (11), contre un montant ou analogues, à l'aide d'une vis de fixation (10) traversant ledit alésage, caractérisé en ce que
a) le rembourrage (5, 6) d'au moins une mâchoire de serrage (3, 4) présente au moins un élément de serrage (12) sous la forme d'une boucle (13) faisant saillie par rapport au pan de verre (2), comprenant une surface frontale d'appui ou de retenue (14) séparée du rembourrage (5, 6) et venant s'appliquer de manière ponctuelle contre le pan de verre (2),
b) au moins un élément de serrage (12) est monté en basculement sur la mâchoire de serrage (3, 4) restante, qui est constitué par un matière élastomère ou par une partie métallique (22), qui est enduit d'une matière élastomère ou qui présente un rembourrage (5, 6) collé ou fixé par engrènement positif pour l'appui contre le pan de verre (2).

2. Dispositif de serrage selon la revendication 1, caractérisé en ce que la boucle (13) est disposée au centre du rembourrage (5, 6).

3. Dispositif de serrage selon la revendication 1, caractérisé en ce que la boucle (13) est arquée pour prendre une configuration sphérique ou de segment sphérique à une base.

4. Dispositif de serrage selon la revendication 1, caractérisé en ce que la boucle (13) est réalisée pour prendre une configuration cunéiforme ou pyramidale.

5. Dispositif de serrage selon la revendication 1, caractérisé en ce que la boucle (13) est réalisée pour prendre une configuration conique ou tronconique.

6. Dispositif de serrage selon la revendication 1, caractérisé en ce que la boucle (13) est réalisée pour prendre une configuration cylindrique ou parallélipipédique.

7. Dispositif de serrage selon la revendication 1, caractérisé en ce que la boucle (13) présente, sur sa surface d'appui ou de retenue (14), un renfoncement (15) ayant un effet de ventouse.

8. Dispositif de serrage selon la revendication 7, caractérisé en ce que le renfoncement (15) ayant un effet de ventouse est rempli avec une matière de silicone déformable.

9. Dispositif de serrage selon la revendication 7, caractérisé en ce que l'espace libre du renfoncement (15) ayant un effet de ventouse est réglable en ce qui concerne son volume.

10. Dispositif de serrage selon la revendication 9, caractérisé en ce que l'espace libre du renfoncement (15) ayant un effet de ventouse peut être modifié à l'aide d'une vis de réglage (16), d'une cheville de réglage ou analogues qui est montée dans un alésage (17) sur le rembourrage (5, 6).

11. Dispositif de serrage selon la revendication 1, caractérisé en ce que chaque élément de serrage (12) présente une saillie de support (20) sur le côté dorsal réalisé pour prendre une configuration sphérique, cunéiforme ou conique, tournée vers la mâchoire de serrage correspondante (3, 4), qui s'appuie en position centrale dans un renfoncement (21) contre la mâchoire de serrage (3, 4), dont la dimension est supérieure à celle de ladite saillie et qui est montée en basculement avec un jeu latéral.

12. Dispositif de serrage selon la revendication 11, caractérisé en ce que la saillie de support (20) côté dorsal est réalisée sur l'élément de serrage (12) en association avec la boucle (13) faisant saillie par rapport au pan de verre (2), en une matière élastomère de telle sorte que la boucle (13) présente une dureté Shore d'environ 60° et la saillie de support (20) présente une dureté Shore supérieure entre 60° et 80°.

13. Dispositif de serrage (1) pour la fixation de pans de verre (2), en particulier des pans de verre constitués par du verre de sécurité feuilleté courbe et plat, comprenant deux mâchoires de serrage (3, 4) aptes à venir s'appliquer contre le bord du pan de verre à fixer, qui présentent, sur leurs côtés internes, un rembourrage (5, 6) constitué d'une matière élastomère et qui peuvent être serrées l'une contre l'autre à l'aide d'au moins une vis de serrage (7), une mâchoire de serrage présentant une partie de base (8) disposée en position perpendiculaire à cette mâchoire de serrage, qui possède un alésage de retenue (9) et qui peut être vissée contre une paroi verticale (11), contre un montant ou analogues, à l'aide d'une vis de fixation (10) traversant ledit alésage, caractérisé en ce qu'au moins une ventouse (40) constituée d'une matière élastomère est disposée contre au moins une mâchoire de serrage (3, 4), dont le volume peut être modifié pour la fixation du pan de verre (2) après le montage de ce dernier.

14. Dispositif de serrage selon la revendication 13, caractérisé en ce que chaque ventouse (40) présente un élément de réglage (41) accessible par le côté dorsal de la mâchoire de serrage (3, 4), à la manière d'un levier de réglage ou analogues qui peut être rabattu pour augmenter la dépression dans l'espace libre (42) de la ventouse (40).

15. Dispositif de serrage selon les revendications 13 et 14, caractérisé en ce que l'élément de réglage (41) est recouvert par un couvercle de recouvrement (43) sur le côté externe de la mâchoire de serrage (3, 4).

16. Dispositif de serrage selon la revendication 1 ou 13, caractérisé en ce que la partie de base (8) du dispositif de serrage (1) présente une surface de montage cintrée (30) et un trou oblong faisant office d'alésage de retenue (9) pour la fixation, disposé en alignement transversal par rapport à ladite surface.

17. Dispositif de serrage selon la revendication 1 ou 13, caractérisé en ce qu'on prévoit une pièce intermédiaire (31) ayant un effet de charnière qui présente une surface de fixation plane (32) pour la fixation à la paroi et une surface d'appui cylindrique (33) sur le côté tourné vers les mâchoires de serrage (3, 4) pour la surface de montage (30) réalisée de manière correspondante, sur le dispositif de serrage (1).

18. Dispositif de serrage (1) pour la fixation de pans de verre (2), en particulier des pans de verre constitués par du verre de sécurité feuilleté courbe et plat, comprenant deux mâchoires de serrage (3, 4) aptes à venir s'appliquer contre le bord du pan de verre à fixer, qui présentent, sur leurs côtés internes, un rembourrage (5, 6) constitué d'une matière élastomère et qui peuvent être serrées l'une contre l'autre à l'aide d'au moins une vis de serrage (7), une mâchoire de serrage présentant une partie de base (8) disposée en position perpendiculaire à cette mâchoire de serrage, qui possède un alésage de retenue (9) et qui peut être vissée contre une paroi verticale (11), contre un montant ou analogues, à l'aide d'une vis de fixation (10) traversant ledit alésage, caractérisé en ce que
a) chaque rembourrage (5, 6) possède une forme allongée rectangulaire,
b) le rembourrage (5, 6) d'au moins une mâchoire de serrage (3, 4) vient se disposer de façon linéaire ou en forme de bande avec une surface d'appui ou de retenue (14) présentant un cintrage convexe contre le pan de verre (2) parallèlement au bord (2a) de ce dernier, respectivement contre la courbure de ce dernier.

19. Dispositif de serrage selon la revendication 18, caractérisé en ce que la surface d'appui ou de retenue (14) du rembourrage (5, 6) est cintrée pour prendre une configuration d'arc de cercle en section transversale.

20. Dispositif de serrage selon la revendication 18 ou 19, caractérisé en ce que la surface d'appui ou de retenue (14) du rembourrage (5, 6) est cintrée pour prendre une configuration en forme d'ellipse ou en forme de parabole.

21. Dispositif de serrage selon l'une quelconque des revendications 18 à 20, caractérisé en ce que le rembourrage (5, 6) présente un côté dorsal concave (14a) parallèle à la surface d'appui ou de retenue (114) présentant un cintrage convexe.

22. Dispositif de serrage selon la revendication 21, caractérisé en ce que le rembourrage rectangulaire (5, 6) est constitué d'une matière élastomère élastique présentant une stabilité dimensionnelle et venant s'appuyer, à l'état non chargé, de manière élastique avec un jeu latéral dans un évidement rectangulaire (151) sur la mâchoire de serrage correspondante (3, 4) avec ses deux bords longitudinaux parallèles (114b, 114c).

23. Dispositif de serrage pour la fixation de pans de verre, en particulier de pans de verre constitués par du verre de sécurité feuilleté courbe et plat, selon une ou plusieurs des revendications 1 à 22,
caractérisé en ce que la partie de base (8) présente des dents d'encliquetage (152) comprenant plusieurs arêtes d'encliquetage (153) disposées en alignement les unes à côté des autres en position parallèle à l'axe longitudinal de la surface de montage arquée (30).

24. Dispositif de serrage selon la revendication 23, caractérisé en ce qu'on prévoit, entre les mâchoires de serrage (3, 4) et la surface de vissage verticale, une pièce intermédiaire (31) ayant un effet de charnière qui présente une surface de fixation plane (32) pour la fixation à la paroi et une surface d'appui cylindrique (33) sur le côté tourné vers les mâchoires de serrage (3, 4), comprenant des dents d'encliquetage (134) s'étendant en position parallèle réciproque à des fins d'engrènement avec les arêtes d'encliquetage (153) disposées en alignement parallèle aux premières citées, sur la surface de montage (30) des mâchoires de serrage (3, 4).

25. Dispositif de serrage selon une ou plusieurs des revendications 1 à 24, dans lequel au moins une des deux mâchoires de serrage présente une nervure de support qui saisit le pan de verre par le bas ou par le haut comprenant un rembourrage de support constitué d'une matière élastomère pour le verre de sécurité feuilleté, caractérisé en ce que le rembourrage de support (161) est constitué d'un copolymère d'éthylène - acétate de vinyle ou d'une matière élastomère de composition analogue exempte de fraction plastifiante.
